# EUROPÄISCHE PATENTSCHRIFT

(11) **EP 1 532 024 B1**
(45) Veröffentlichungstag und Bekanntmachung des Hinweises auf die Patenterteilung: **08.10.2008**
(21) Anmeldenummer: 03792145.9
(22) Anmeldetag: 19.08.2003
(51) Int. Cl.: B60R 21/26

(54) **AIRBAGMODUL MIT GASGENERATOR**
AIRBAG MODULE HAVING A GAS GENERATOR
MODULE COUSSIN GONFLABLE DE PROTECTION POURVU D'UN GENERATEUR DE GAZ

(30) Priorität: 20.08.2002 DE 10238842
(43) Veröffentlichungstag der Anmeldung: 25.05.2005
(73) Patentinhaber: Takata-Petri AG, 63743 Aschaffenburg (DE)
(72) Erfinder: MAROTZKE, Thomas, 16562 Bergfelde (DE)
(74) Vertreter: Müller, Wolfram Hubertus
(86) Internationale Anmeldenummer: PCT/DE2003/002834
(87) Internationale Veröffentlichungsnummer: WO 2004/018267

(56) Entgegenhaltungen:
- DE-A- 19 506 886
- US-A- 5 480 185
- US-A- 6 126 195
- US-A1- 2002 096 871

## Beschreibung

Die Erfindung betrifft ein Airbagmodul mit Gasgenerator nach dem Oberbegriff des Anspruchs 1.

Es sind Gasgeneratoren für Airbagmodule bekannt, die mehrere Abtrömöffnungen aufweisen, aus denen nach Zündung des Gasgenerators die für das Entfalten des Gassacks notwendigen Gase austreten. Aus Sicherheitsgründen sind die Abströmöffnungen so angeordnet, daß der Gasgenerator bei versehentlicher Zündung vor seinem Einbau schubfrei arbeitet, d.h., daß er nicht wie ein Raketentriebwerk wirkt. Die Abströmöffnungen müssen deshalb gleichmäßig am Umfang des Gasgenerators verteilt sein.

Nach dem Einbau des Gasgenerators in das Airbagmodul sollen die Gase aber in Richtung des Gassacks strömen, d.h. sie müssen umgelenkt werden, da sie aus dem Gasgenerator in unterschiedliche Richtungen strömen. Deshalb ist im Airbagmodul ein Ringspalt zwischen Gasgenerator und Modulgehäuse bzw, einem Diffusor vorgesehen, wie es z.B. aus DE 195 06 886 A1 oder US 6 126 195 bekannt ist. Im Ringspalt werden die im Gasgenerator produzierten Gase gesammelt und mit dem Ziel gerichtet, eine gute Gassackentfaltung zu erreichen.

Der Nachteil dieser Anordnungen besteht darin, daß die Baugröße des Airbagmoduls durch den Ringspalt und Gaskanäle um den Gasgenerator erhöht wird. Weiterhin wird das Gehäuse des Airbagmoduls durch den Gasdruck bei Auslösung des Gasgenerators aufgrund großer projizierter Flächen einer hohen mechanischen Beanspruchung ausgesetzt. Deshalb muß das Modul eine hohe Festigkeit aufweisen. So müssen zum Beispiel viele Schrauben verwendet werden. Wegen der erforderlichen hohen Festigkeit ergibt sich ein erhöhtes Gewicht. Weiterhin entstehen durch die Gasumlenkung Energieverluste und durch Leckagen im Modulgehäuse besteht das Risiko von Gasverlusten.

Aus dem US-Patent 5 480 185 ist ein Gasgenerator bekannt, der nur eine Abströmöffnung in Richtung eines Diffusors aufweist. Dieser Gasgenerator kann deshalb vor dem Einbau nicht schubfrei arbeiten und entspricht damit nicht den hohen Sicherheitsanforderungen. Weiterhin ist mit diesem Gasgenerator eine Anpassung an besondere Anordnungen des Gassacks nicht möglich. Der zusätzlich angeordnete Diffusor verursacht zusätzliche Kosten.

Der Erfindung liegt die Aufgabe zugrunde, bei einem Airbagmodul mit Gasgenerator, der mehrere über seinem Umfang verteilte Abströmöffnungen, insbesondere mindestens zwei gegenüberliegende Abströmöffnungen aufweist, den Ringspalt zu vermeiden.

Erfindungsgemäß wird das gemäß den Merkmalen des Anspruchs 1 erreicht.

Bei einem Airbagmodul mit Gasgenerator, insbesondere mit Rohrgasgenerator, der mehrere über seinen Umfang verteilte Abströmöffnungen für die nach seiner Zündung entstehenden Gase aufweist, ist erfindungsgemäß mindestens eine der Abströmöffnungen im Gasgenerator während des Einbaus oder nach dem Einbau im Airbagmodul verschließbar und der Gasgenerator ist in einem Modulgehäuse befestigt, das im Bereich jeder zu verschließenden Öffnung des Gasgenerators ein Verschlußelement aufweist. Dadurch ist es möglich, daß bei der Verwendung von Gasgeneratoren, die bei Zündung im freien Raum schubfrei arbeiten, nach dem Einbau des Gasgenerators in das Airbagmodul nur Abströmöffnungen geöffnet sind, die in eine gewünschte Richtung wirksam sind, d.h. vornehmlich in Richtung des Gassacks. Da die gegenüberliegenden, vom Gassack wegweisenden Abströmöffnungen verschlossen sind, kann der Ringspalt für die Umlenkung der Gase in Richtung des Gasacks entfallen.

Es ist zweckmäßig, daß für jede zu verschließende Abströmöffnung ein in diese eingreifendes Verschlußelement vorgesehen ist. Dabei weist das Verschlußelement vorzugsweise den Durchmesser der Abströmöffnung auf. Aber auch ein konischer Verschluß ist möglich. Gegenüber einem flächigen Verschluß, bei dem dieser nur auf der Abströmöffnung aufliegt, besteht der Vorteil, daß eine erhöhte Sicherheit der Abdichtung erreicht wird.

In einer Ausführungsform ist für jede zu verschließende Abströmöffnung ein separater Verschlußstopfen als Verschlußelement vorgesehen.

Wenn der Gasgenerator in einem Modulgehäuse befestigt ist, weist dieses in einer weiteren Ausführungsform im Bereich jeder zu verschließenden Öffnung des Gasgenerators ein Verschlußelement auf. Bei dieser Ausführungsform ist das Verschlußelement also integrierter Bestandteil des Modulgehäuses.

Die Erfindung ist insbesondere bei der Verwendung von Rohrgasgeneratoren vorteilhaft verwendbar, wobei das Modulgehäuse im Bereich jeder der zu verschließenden Abströmöffnungen des Rohrgasgenerators eng an diesem anliegt. Es ist zweckmäßig, daß das Modulgehäuse an jeder zu verschließenden Öffnung als Verschlußelement einen zylindrischen Ansatz oder eine Sicke aufweist.

In einer Ausführungsform weist das Modulgehäuse im Bereich des Gasgenerators die Form einer an das Generatorgehäuse angepaßten Halbschale auf und zur Fixierung des Gasgenerators ist im Modulgehäuse ein Halteblech vorgesehen.

Bei Verwendung eines zylindrischen Rohrgasgenerators ist das Modulgehäuse als zylindrische Halbschale ausgebildet, der eine zylindrische Halbschale als Halteblech zugeordnet ist. Es ist zweckmäßig, daß das Halteblech in Richtung des Gasgenerators gerichtete Sicken aufweist, und daß das Halteblech mindestens ein Verschlußelement aufweist, d.h. daß jeder zu verschließenden Gasgeneratoröffnung, die sich im Bereich des Halteblechs befindet, an diesem ein Verschlußelement zugeordnet ist. Es ist weiterhin zweckmäßig, daß als Verschlußelement eine Sicke im Halteblech vorgesehen ist.

Die Erfindung soll in Ausführungsbeispielen anhand von Zeichnungen näher erläutert werden. Es zeigen:
- Fig. 1: einen Längsschnitt durch eine erste Ausführungsform;
- Fig. 2: einen Querschnitt II-II der Anordnung nach Fig. 1;
- Fig.3: einen Querschnitt durch eine zweite Ausführungsform;
- Fig. 4: einen Querschnitt durch eine dritte Ausführungsform;
- Fig. 5: einen Querschnitt durch eine vierte Ausführungsform.

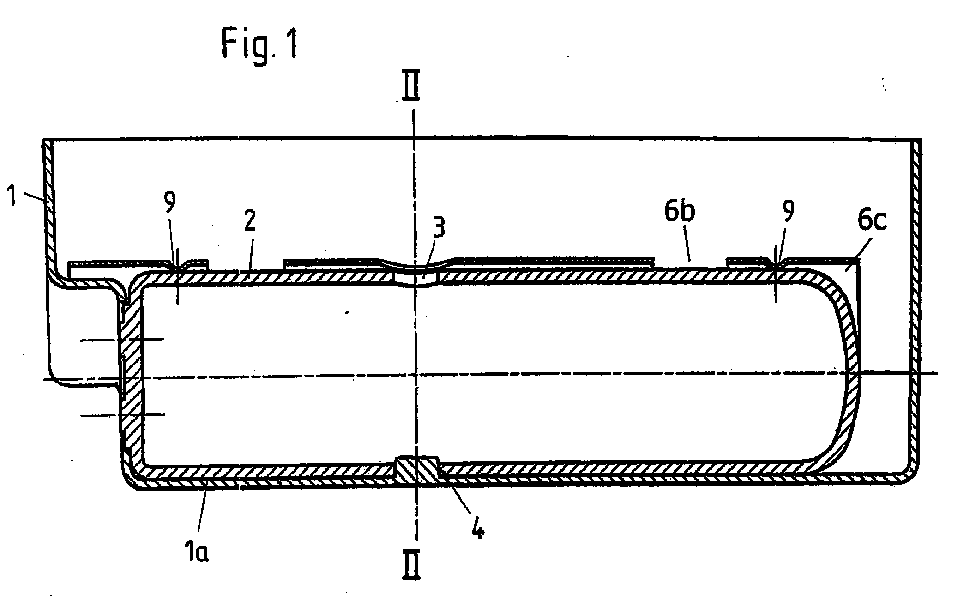

In der Fig. 1 ist ein Modulgehäuse 1 dargestellt, in dem ein Rohrgasgenerator 2 befestigt ist. Dieser weist gegenüberliegende Abströmöffnungen 3, 4 auf, so daß er im Falle einer versehentlichen Zündung im freien Raum schubfrei arbeitet.

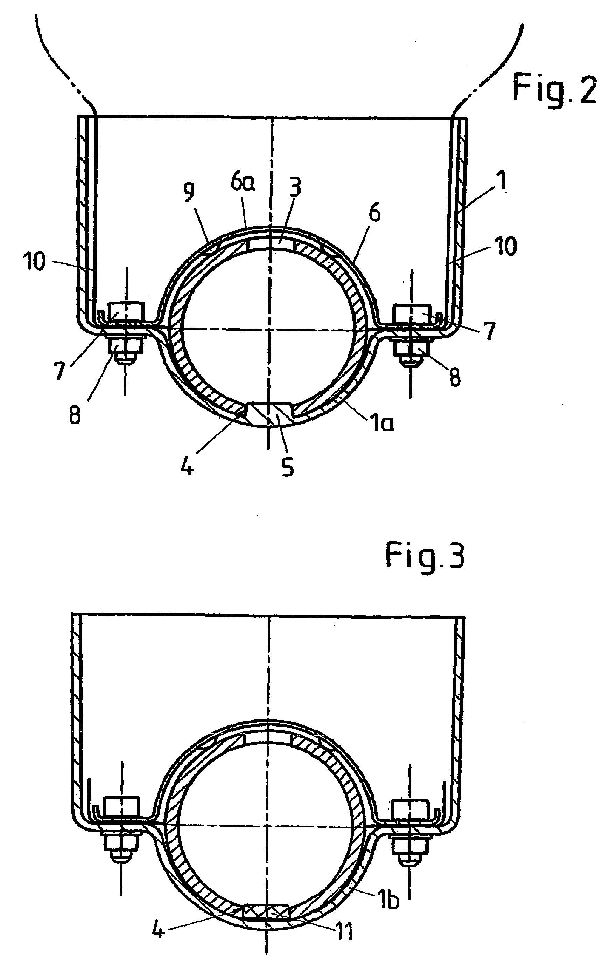

Das Modulgehäuse ist im unteren Abschnitt als Halbschale 1a ausgebildet, die außerdem einen zylindrischen Verschlußstopfen 5 als Verschlußelement für die Abströmöffnung 4 aufweist. Beide weisen den gleichen Durchmesser mit den notwenigen Toleranzen auf, um einerseits den Verschlußstopfen in die Abströmöffnung einführen zu können und um andererseits die Abdichtung zu gewährleisten. Wie aus den Figuren 1 und 2 ersichtlich ist, liegt der Rohrgasgenerator 2 eng an der Halbschale 1a an. Die Befestigung des Rohrgasgenerators 2 im Modulgehäuse 1 erfolgt mittels eines Haltebleches 6, das mittels Schrauben 7 und Muttern 8 mit dem Modulgehäuse verbunden ist und dabei den Rohrgasgenerator 2 gegen die Halbschale 1a drückt. Das Halteblech 6 ist ebenfalls als Halbschale ausgebildet. Der Andruck an den Rohrgasgenerator erfolgt bei dieser Ausführungsform nicht auf der gesamten Fläche der Halbschale sondern über Sicken 9. Mittels der Schrauben 7 und der Muttern 8 wird auch ein Gassack 10 zwischen dem Modulgehäuse 1 und dem Halteblech 6 eingeklemmt und damit am Modulgehäuse 1 befestigt.

Es ist ersichtlich, daß bei dieser Ausführungsform die Gase aus dem Gasgenerator größtenteils durch die Abströmöffnung 3 und durch eine angrenzende Öffnung 6a im Halteblech 6 nur in Richtung des Gassacks 10 strömen können. Eine geringe Gasmenge tritt über den durch die Sicken 9 bedingten Spalt, durch Entlastungsöffnungen 6b und stirnseitige Öffnungen 6c ebenfalls nur in Richtung des Gassacks 10 aus, wie aus den Figuren 1 und 2 ersichtlich ist.

Die Ausführungsform der Fig. 3 unterscheidet sich von der Ausführungsform der Figuren 1 und 2 dadurch, daß ein gesonderter Verschlußstopfen 11 als Verschlußelement für die Abströmöffnung 4 und eine glatte Halbschale 1b vorgesehen ist. Durch die eng am Rohrgasgenerator 2 anliegende Halbschale 1b ist auch bei dieser Ausführungsform gewährleistet, daß der Verschlußstopfen 11 nach Zündung des Gasgenerators nicht aus der Abströmöffnung 4 gedrückt wird. Die nicht mit Bezugszeichen versehenen Teile entsprechen den in den Figuren 1 und 2 dargestellten.

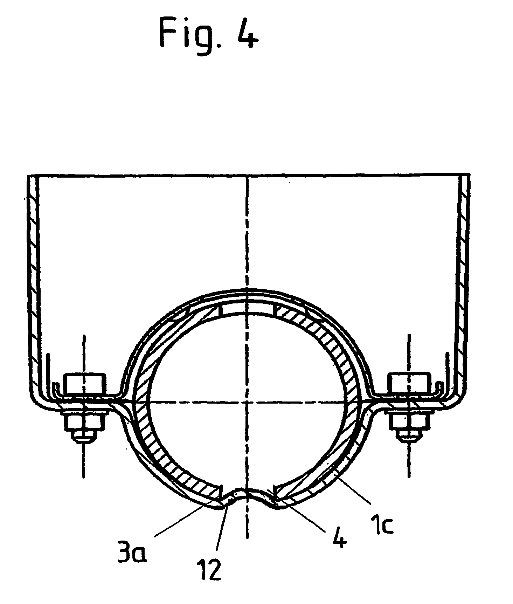

Bei der Ausführungsform der Fig. 4 ist anstelle eines Verschlußstopfens eine Sicke 12 in einer Halbschale 1c als Verschlußelement vorgesehen. Die Sicke füllt nicht die gesamte Abströmöffnung 4 aus, sondern die Abdichtung erfolgt an der Außenkante 3a.

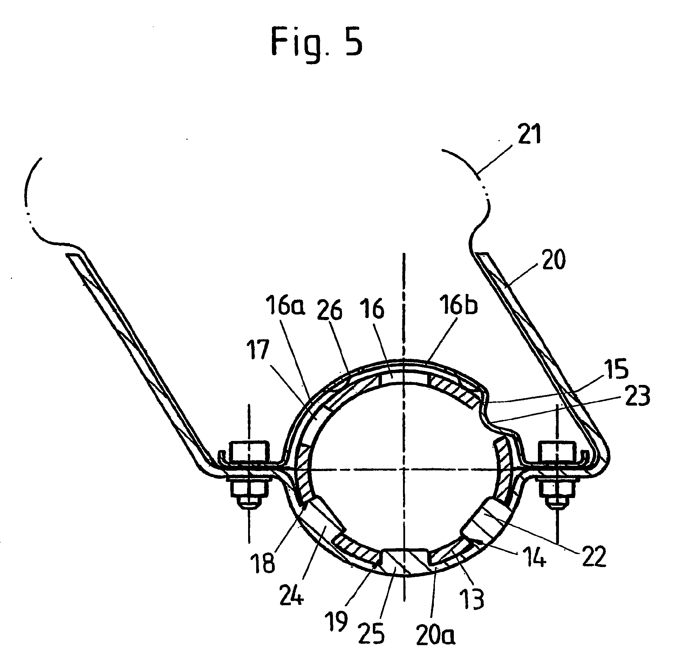

Bei der Ausführungsform der Fig. 5 ist ein Rohrgasgenerator 13 mit sechs sich gegenüberliegenden Abströmöffnungen 14 - 19 vorgesehen. Der Rohrgasgenerator ist in einem einseitig ausgerichteten Modulgehäuse 20 angeordnet. Um zu erreichen, daß die Gase nach Zündung des Gasgenerators im wesentlichen in Richtung eines Gassacks 21 strömen, sind die Abströmöffnungen 14, 15, 18 und 19 verschlossen. Hierzu ist eine untere Halbschale 20a des Modulgehäuses 20 mit Verschlußstopfen 22, 24 und 25 versehen, die in die Abströmöffnungen 14, 18 und 19 eingreifen. Weiterhin weist ein Halteblech 26 eine Sicke 23 für den Verschluß der Abströmöffnung 15 auf. Dadurch wird erreicht, das Gase aus dem Gasgenerator nach dessen Zündung größtenteils nur aus den Abströmöffnungen 16 und 17 und durch die angrenzenden Öffnungen 16a, b im Halteblech 26 in den Gassack strömen können.

## Patentansprüche

1. Airbagmodul mit Gasgenerator, insbesondere mit Rohrgasgenerator, der mehrere über seinen Umfang verteilte Abströmöffnungen für die nach seiner Zündung entstehenden Gase aufweist,
**dadurch gekennzeichnet,**
**daß** mindestens eine der Abströmöffnungen (3, 4, 14-19) im Gasgenerator (2) während des Einbaus oder nach dem Einbau im Airbagmodul verschließbar ist und daß der Gasgenerator (2) in einem Modulgehäuse (1, 20) befestigt ist, das im Bereich jeder zu verschließenden Öffnung (4, 14, 18, 19) des Gasgenerators (13) ein Verschlußelement (5, 22 - 25) aufweist.

2. Airbagmodul nach Anspruch 1, **dadurch gekennzeichnet, daß** für jede zu verschließende Abströmöffnung (3, 4, 14-19) ein in diese eingreifendes Verschlußelement (5, 22- 25) vorgesehen ist.

3. Airbagmodul nach Anspruch 2, **dadurch gekennzeichnet, daß** das Verschlußelement (5, 22-25) den Durchmesser der Abströmöffnungen (3, 4, 14-19) aufweist.

4. Airbagmodul nach mindestens einem der Ansprüche 1 bis 3, **dadurch gekennzeichnet, daß** für jede zu verschließende Abströmöffnung (3, 4, 14-19) ein separater Verschlußstopfen (11) als Verschlußelement vorgesehen ist.

5. Airbagmodul nach mindestens einem der vorhergehenden Ansprüche, **dadurch gekennzeichnet, daß** als Gasgenerator ein Rohrgasgenerator (2) vorgesehen ist, wobei das Modulgehäuse (1, 20) im Bereich jeder der zu verschließenden Abströmöffnungen (4, 14, 18, 19) des Gasgenerators (2, 13) eng an diesem anliegt.

6. Airbagmodul nach mindestens einem der vorhergehenden Ansprüche, **dadurch gekennzeichnet, daß** das Modulgehäuse 1, 20) an jeder zu verschließenden Öffnung (4, 14, 18, 19) als Verschlußelement (5, 22, 24, 25) einen zylindrischen Ansatz aufweist.

7. Airbagmodul nach mindestens einem der vorhergehenden Ansprüche, **dadurch gekennzeichnet, daß** das Modulgehäuse (1) an jeder zu verschließenden Öffnung (4) als Verschlußelement eine Sicke (9) aufweist.

8. Airbagmodul nach mindestens einem der vorhergehenden Ansprüche , **dadurch gekennzeichnet, daß** das Modulgehäuse (1, 20) im Bereich des Gasgenerators (2, 13) die Form einer an das Generatorgehäuse angepaßten Halbschale (1a-c, 20a) aufweist und daß zur Fixierung des Gasgenerators (2, 13) im Modulgehäuse (1, 20) ein Halteblech (6, 26) vorgesehen ist.

9. Airbagmodul nach Anspruch 8, **dadurch gekennzeichnet, daß** das Modulgehäuse (1, 20) bei Verwendung eines zylindrischen Rohrgasgenerators (2, 13) als zylindrische Halbschale (1a-c, 20a) ausgebildet ist, der eine zylindrische Halbschale als Halteblech (6, 26) zugeordnet ist.

10. Airbagmodul nach Anspruch 8 oder 9, **dadurch gekennzeichnet, daß** das Halteblech (6, 26) in Richtung des Gasgenerators (2, 13 gerichtete Sicken (9) aufweist.

11. Airbagmodul nach mindestens einem der Ansprüche 8 bis 10, **dadurch gekennzeichnet, daß** das Halteblech (26) mindestens ein Verschlußelement (23) aufweist.

12. Airbagmodul nach Anspruch 11, **dadurch gekennzeichnet, daß** als Verschlußelement eine Sicke (23) im Halteblech (26) vorgesehen ist.

## Claims

1. An airbag module having a gas generator, in particular having a tubular gas generator, which has a plurality of outflow openings distributed over its circumference for the gases produced after it has been triggered, **characterized in that** at least one of the outflow openings (3, 4, 14-19) in the gas generator (2) can be closed during the installation or after the installation in the airbag module, and **in that** the gas generator (2) is fastened in a module housing (1, 20) which has a closure element (5, 22-25) in the region of each opening (4, 14, 18, 19) to be closed of the gas generator (13).

2. The airbag module as claimed in claim 1, **characterized in that** for each outflow opening (3, 4, 14-19) to be closed, a closure element (5, 22-25) engaging in the latter is provided.

3. The airbag module as claimed in claim 2, **characterized in that** the closure element (5, 22-25) has the diameter of the outflow openings (3, 4, 14-19).

4. The airbag module as claimed in at least one of claims 1 to 3, **characterized in that** for each outflow opening (3, 4, 14-19) to be closed, a separate closure stopper (11) is provided as the closure element.

5. The airbag module as claimed in at least one of the preceding claims, **characterized in that** a tubular gas generator (2) is provided as the gas generator, the module housing (1, 20) bears tightly against the gas generator (2, 13) in the region of each of the outflow openings (4, 14, 18, 19) to be closed of the same.

6. The airbag module as claimed in at least one of the preceding claims, **characterized in that** the module housing (1, 20) has, on each opening (4, 14, 18, 19) to be closed, a cylindrical lug as the closure element (5, 22, 24, 25).

7. The airbag module as claimed in at least one of the preceding claims, **characterized in that** the module housing (1) has, on each opening (4) to be closed, a bead (9) as the closure element.

8. The airbag module as claimed in at least one of the preceding claims, **characterized in that** the module housing (1, 20) has, in the region of the gas generator (2, 13), the shape of a half shell (1a-c, 20a) matched to the generator housing, and **in that** a retaining plate (6, 26) is provided for fixing the gas generator (2, 13) in the module housing (1, 20).

9. The airbag module as claimed in claim 8, **characterized in that** the module housing (1, 20), when a cylindrical tubular gas generator (2, 13) is used, is designed as a cylindrical half shell (1a-c, 20a) which is assigned a cylindrical half shell as the retaining plate (6, 26).

10. The airbag module as claimed in claim 8 or 9, **characterized in that** the retaining plate (6, 26) has beads (9) directed toward the gas generator (2, 13).

11. The airbag module as claimed in at least one of claims 8 to 10, **characterized in that** the retaining plate (26) has at least one closure element (23).

12. The airbag module as claimed in claim 11, **characterized in that** a bead (23) is provided in the retaining plate (26) as the closure element.

## Revendications

1. Module de coussin gonflable pourvu d'un générateur de gaz, en particulier d'un générateur de gaz tubulaire qui présente plusieurs ouvertures de sortie réparties sur son pourtour pour les gaz qui se forment après son allumage,
**caractérisé en ce que**
l'une au moins des ouvertures de sortie (3, 4, 14-19) dans le générateur de gaz (2) est fermable pendant le montage ou après le montage dans le module de coussin gonflable, et **en ce que** le générateur de gaz (2) est fixé dans un boîtier de module (1, 20) qui comprend un élément obturateur (5, 22 - 25) dans la zone de chaque ouverture à fermer (4, 14, 18, 19) du générateur de gaz (13).

2. Module de coussin gonflable selon la revendication 1, **caractérisé en ce que** pour chaque ouverture de sortie à fermer (3, 4, 14 - 19) est prévu un élément obturateur (5, 22 - 25) qui s'engage dans celle-ci.

3. Module de coussin gonflable selon la revendication 2, **caractérisé en ce que** l'élément obturateur (5, 22 - 25) présente le diamètre des ouvertures de sortie (3, 4, 14 - 19).

4. Module de coussin gonflable selon l'une au moins des revendications 1 à 3, **caractérisé en ce que** pour chaque ouverture à fermer (3, 4, 14 - 19) est prévu un bouchon obturateur séparé (11) à titre d'élément obturateur.

5. Module de coussin gonflable selon l'une au moins des revendications précédentes, **caractérisé en ce qu'**il est prévu à titre de générateur de gaz un générateur de gaz (2) tubulaire, le boîtier de module (1, 20) s'appliquant étroitement contre le générateur de gaz (2, 13) dans la zone de chacune des ouvertures de sortie à fermer (4, 14, 18, 19) de celui-ci.

6. Module de coussin gonflable selon l'une au moins des revendications précédentes, **caractérisé en ce que** le boîtier de module (1, 20) comprend à titre d'élément obturateur (5, 22, 24, 25) un talon cylindrique au niveau de chacune des ouvertures de sortie à fermer (4, 14,18,19).

7. Module de coussin gonflable selon l'une au moins des revendications précédentes, **caractérisé en ce que** le boîtier de module (1) présente à titre d'élément obturateur une nervure (9) au niveau de chaque ouverture à fermer (4).

8. Module de coussin gonflable selon l'une au moins des revendications précédentes, **caractérisé en ce que** dans la zone du générateur de gaz (2, 13), le boîtier de module (1, 20) présente la forme d'une demi-coque (1a-c, 20a) adaptée au boîtier de générateur, et **en ce que** pour fixer le générateur de gaz (2, 13) dans le boîtier de module (1, 20), il est prévu une tôle de retenue (6, 26).

9. Module de coussin gonflable selon la revendication 8, **caractérisé en ce que** lors de l'utilisation d'un générateur de gaz (2, 13) tubulaire cylindrique, le boîtier de module (1, 20) est réalisé sous la forme d'une demi-coque cylindrique (1a-c, 20a) à laquelle est associée une demi-coque cylindrique à titre de tôle de retenue (6, 26).

10. Module de coussin gonflable selon la revendication 8 ou 9, **caractérisé en ce que** la tôle de retenue (6, 26) présente des nervures (9) dirigées dans la direction du générateur de gaz (2, 13).

11. Module de coussin gonflable selon l'une au moins des revendications 8 à 10, **caractérisé en ce que** la tôle de retenue (26) présente au moins un élément obturateur (23).

12. Module de coussin gonflable selon la revendication 11, **caractérisé en ce qu'**à titre d'élément obturateur est prévue une nervure (23) dans la tôle de retenue (26).
